# EUROPÄISCHE PATENTANMELDUNG

(11) **EP 2 511 352 A1**
(43) Veröffentlichungstag der Anmeldung: **17.10.2012**
(21) Anmeldenummer: 11162170.2
(22) Anmeldetag: 13.04.2011
(51) Int. Cl.: C09D 11/02, C09D 11/10

(54) **Siebdruckverfahren mit zu einem Polyurethanpolymer reagierender Drucktinte**

(71) Anmelder: Bayer Materialscience AG, 51368 Leverkusen (DE)
(72) Erfinder: Jenninger, Werner Dr., "verstorben" (FR); Wagner, Jaochim Dr., 51061 Köln (DE); Bernert, Thomas Dr., 51377 Leverkusen (DE); Schapeler, Dirk, 94040-0000 Mountain View (US)

(57) **Zusammenfassung**

Die Erfindung betrifft ein Verfahren zum Bedrucken von Gegenständen, umfassend den Schritt des Auftragens einer Drucktinte mittels Siebdrucken, wobei die Drucktinte ein Polyisocyanat A) und/oder ein Polyisocyanat-Prepolymer B), eine mindestens difunktionelle, gegenüber Isocyanatgruppen reaktive Verbindung C) sowie weiterhin einen durch Temperarturerhöhung aktivierbaren Katalysator D) umfasst. Sie betrifft weiterhin die Verwendung einer entsprechenden Reaktionsmischung als Drucktinte in Siebdruckverfahren sowie einen elektromechanischen Wandler mit einer durch ein erfindungsgemäßes Verfahren hergestellten Polymerschicht.

## Beschreibung

Die vorliegende Erfindung betrifft ein Verfahren zum Bedrucken von Gegenständen, umfassend den Schritt des Auftragens einer Drucktinte mittels Siebdrucken, wobei die Drucktinte nach dem Siebdruckschritt zu einem Polyurethanpolymer ausreagiert. Sie betrifft weiterhin die Verwendung einer entsprechenden Reaktionsmischung als Drucktinte in Siebdruckverfahren sowie einen elektromechanischen Wandler mit einer durch ein erfindungsgemäßes Verfahren hergestellten Polymerschicht.

Elektromechanische Wandler spielen eine wichtige Rolle bei der Umwandlung von elektrischer Energie in mechanische Energie und umgekehrt. Elektromechanische Wandler können daher als Sensoren, Aktuatoren und/oder Generatoren eingesetzt werden.

Eine Klasse von solchen Wandlern basiert auf elektroaktiven Polymeren. Es ist ein ständiges Ziel, die Eigenschaften der elektroaktiven Polymere, insbesondere den elektrischen Widerstand und die Durchbruchfestigkeit, zu erhöhen. Gleichzeitig soll aber die Mechanik der Polymere sie für Einsätze in elektromechanischen Wandlern geeignet machen. Letztendlich ist für eine erfolgreiche Anwendung auch die Auswahl der in Frage kommenden Herstellungsverfahren wichtig.

Beispiele für elektromechanische Wandler finden sich in WO 2001/06575 A1. Diese Patentanmeldung betrifft Wandler, ihre Verwendung und ihre Herstellung. Solch ein Wandler zur Umwandlung von mechanischer Energie in elektrische Energie umfasst wenigstens zwei Elektroden und ein Polymer. Das Polymer ist so angeordnet, dass als Folge einer Längenänderung eines ersten Abschnittes ein elektrisches Feld verändert wird. Weiterhin ist ein zweiter Abschnitt des Polymers elastisch vorgespannt.

Für die Fertigung sowohl von dünnen, flächenförmigen Elementen als auch von feinen linienförmigen Strukturen bietet sich grundsätzlich das Siebdrucken an. Die Eigenschaften der hergestellten Elemente und Strukturen hängen dabei selbstverständlich von der verwendeten Drucktinte ab.

EP 1 500 687 A1 beschreibt eine Tinte für Siebdruckverfahren, wobei durch die Tinte auf dem erhaltenen Druckbild eine Rauhigkeit und/oder Dicke erreicht wird. Insbesondere soll die dort beschriebene Tinte in Katalogen und Werbedrucken für dekorative Wandbeschichtungen eingesetzt werden, um die Haptik einer solchen Beschichtung wiederzugeben. Es wird auch die Möglichkeit beschrieben, dass die Tinte Polyurethan-Bindemittel enthält. Dadurch, dass ein ausreagiertes Polyurethanpolymer schon vor dem Druckvorgang vorliegt, werden hier aber gewisse Beschränkungen auferlegt. So lassen sich zum Beispiel nur lösliche oder dispergierbare Polymere verarbeiten.

US 6,336,666 betrifft ein Verfahren zur Herstellung eines Films mit einem Muster, welches die Vervielfältigung durch optisches Scannen verhindern soll. Bei der Herstellung eines Films durch Bedrucken einer Decklage mit einer nicht-glänzenden Oberfläche haftet eine erste glänzende Druckschicht auf der Oberfläche. Eine zweite kontinuierliche Drucklage haftet weder auf der Decklage noch auf der ersten Drucklage. In dieser Patentschrift wird die Möglichkeit des Siebdruckens für die Drucklagen erwähnt. Weiterhin wird erwähnt, dass für die zweite Drucklage eine Zweikomponentenmischung verwendet werden kann, welche in situ polymerisiert und insbesondere eine Polyurethanschicht bilden kann. In dieser Patentschrift wird allerdings keine Aussage über die Verarbeitungszeiten des Siebdruckens getroffen.

Hinsichtlich der Verarbeitungszeiten sind zwei Faktoren von Bedeutung für eine reaktive Drucktinte, welche erst nach dem Siebdrucken zu einem vorzugsweise unlöslichen Polymernetzwerk ausreagiert. Die Topfzeit der fertig angesetzten Drucktinte sollte nicht zu kurz sein, damit die Verarbeitung der Tinte nicht zu starken Einschränkungen unterliegt. Weiterhin sollte aber die Vernetzungszeit kurz sein, so dass das Druckerzeugnis schnell getrocknet und weiterverarbeitet werden kann.

Vor diesem Hintergrund hat sich die vorliegende Erfindung die Aufgabe gestellt, ein Verfahren bereitzustellen, bei dem auf dem bedruckten Gegenstand ein Polyurethanpolymer erhalten wird und welches mit kürzere Taktzeiten durchgeführt werden kann.

Erfindungsgemäß gelöst wird die Aufgabe durch ein Verfahren zum Bedrucken von Gegenständen, umfassend den Schritt des Auftragens einer Drucktinte mittels Siebdrucken, wobei die Drucktinte
ein Polyisocyanat A) und/oder
ein Polyisocyanat-Prepolymer B),
eine mindestens difunktionelle, gegenüber Isocyanatgruppen reaktive Verbindung C)
sowie weiterhin einen durch Temperaturerhöhung aktivierbaren Katalysator D) umfasst.

Unter einem "durch Temperaturerhöhung aktivierbaren Katalysator" im Sinne der vorliegenden Erfindung wird verstanden, dass dessen aktiver Bestandteil erst bei Temperaturerhöhung abgespalten und/oder freigesetzt wird.

Es wurde gefunden, dass durch einen durch Temperaturerhöhung aktivierbaren Katalysator die Topfzeit der Drucktinte nicht zu stark eingeschränkt wird bei gleichzeitig kurzer Vernetzungszeit unter thermischer Einwirkung. Hierdurch wird die Effektivität des Siebdruckprozesses deutlich gesteigert und es lässt sich eine erweiterte Gruppe von Polyurethanen, insbesondere Polyurethanelastomeren, als aufgetragenes Druckbild erhalten. Der thermisch aktivierbare Katalysator bietet den Vorteil einer wesentlich erhöhten Topfzeit bei gleichzeitig kurzer Reaktionszeit. Daraus ergibt sich eine höhere Standzeit des Siebes im kontinuierlich/quasikontinuierlichen Druckprozess bei kurzen Zykluszeiten im Produktionsbetrieb.

Als Iso- und Polyisocyanate A) eignen sich beispielsweise 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis-(4,4`-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendüsocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente A).

Vorzugsweise kann die Komponente A) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Die als Komponente B) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen (NH₂- und/oder NH-funktionelle Komponenten) für die Bildung des Polyisocyanat-Prepolymers eingesetzt werden.

Das Polyisocyanat-Prepolymer als Komponente B) kann bevorzugt aus der Umsetzung von polymeren Polyolen und aliphatischen Diisocyanaten erhältlich sein. Hydroxyfunktionelle, polymere Polyole für die Umsetzung zum Polyisocyanat-Prepolymer B) können beispielsweise Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere B) können Polykondensate aus Di- sowie gegebenenfalls Tri- und Tetraolen und Di- sowie gegebenenfalls Tri-und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

Als Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere B) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewicht Mₙ von 400 g/mol bis 8000 g/mol, bevorzugt von 600 g/mol bis 3000 g/mol haben. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactonmodifizierte Diole der vorstehend genannten Art oder Mischungen davon.

Bevorzugt enthält dann die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten werden derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere B) Polyetherpolyole eingesetzt werden. Beispielsweise eignen sich Polytetramethylenglykolpolyether, wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Bevorzugte Komponenten zur Herstellung der Polyisocyanat-Prepolymere B) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht Mₙ von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere B) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-ε-hydroxy-capronsäureester, ω-Hydroxyhexyl-γ-hydroxybuttersäure-ester, Adipinsäure-(β-hydroxyethyl)ester oder Terephthalsäurebis(β-hydroxyethyl)-ester.

Ferner können zur Herstellung der Polyisocyanat-Prepolymere B) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere B) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet werden, wobei restmonomerenarme Produkte mit Restmonomergehalten von beispielsweise ≤ 1 Gewichtsprozent, bevorzugt ≤ 0,5 Gewichtsprozent, besonders bevorzugt ≤ 0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH₂- und/oder NH-funktionelle Komponenten zusätzlich zur Kettenverlängerung bei der Herstellung der Polyisocyanat-Prepolymere B) eingesetzt werden.

Geeignete Komponenten zur Kettenverlängerung sind organische Di- oder Polyamine. Beispielsweise können Ethylendiamin, 1,2-Diaminopropan, 1,3-Diaminopropan, 1,4-Diaminobutan, 1,6-Diaminohexan, Isophorondiamin, Isomerengemische von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere B) eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexylaminopropan, 3-Amino-1-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketimine von diprimären Aminen, primär/tertiäre Amine, wie N,N-Dimethylaminopropylamin, verwendet.

Die als Komponente B) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 3 aufweisen.

Die Komponente C) ist eine Verbindung mit mindestens zwei isocyanatreaktiven funktionellen Gruppen. Beispielsweise kann Komponente C) ein Polyamin oder ein Polyol mit mindestens zwei isocyanatreaktiven Hydroxygruppen sein.

Als Komponente C) können hydroxyfunktionelle, insbesondere polymere, Polyole, beispielsweise Polyetherpolyole oder Polyesterpolyole eingesetzt werden. Geeignete Polyole wurden bereits vorstehend im Zusammenhang mit der Herstellung des Prepolymers B) geschildert, so dass zur Vermeidung von Wiederholungen hierauf Bezug genommen wird.

Es ist bevorzugt, dass die Komponente C) ein Polymer mit 2 bis 4 Hydroxygruppen pro Molekül, ganz besonders bevorzugt ein Polypropylenglykol mit 2 bis 3 Hydroxygruppen pro Molekül ist.

Es ist günstig, wenn die polymeren Polyole C) eine besonders enge Molekulargewichtsverteilung, das heißt eine Polydispersität (PD = M_{w}/Mₙ) von 1,0 bis 1,5 aufweisen. Bevorzugt weisen beispielsweise Polyetherpolyole eine Polydispersität von 1,0 bis 1,5 und eine OH-Funktionalität von größer 1,9 auf, und besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten A) und/oder B) und C) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02 bis 1:0,95.

Vorzugsweise besitzt zumindest eine der Komponenten A), B) oder C) eine Funktionalität von ≥ 2,0, bevorzugt von ≥ 2,5 bevorzugt von ≥ 3,0, um in das Polymerelement eine Verzweigung oder eine Vernetzung einzuführen. Der Begriff "Funktionalität" bezieht sich bei Komponente A) und B) auf die mittlere Anzahl von NCO-Gruppen pro Molekül und bei Komponente C) auf die mittlere Anzahl von OH-, NH, oder NH₂-Gruppen pro Molekül. Diese Verzweigung beziehungsweise Vernetzung bewirkt bessere mechanische Eigenschaften und bessere elastomere Eigenschaften, insbesondere auch bessere Dehnungseigenschaften.

Das aus der Drucktinte erhaltene Polyurethanpolymer kann vorzugsweise eine maximale Spannung von ≥ 0,2 MPa, insbesondere von 0,4 MPa bis 50 MPa, und eine maximale Dehnung von ≥ 100 %, insbesondere von ≥ 120 %, aufweisen. Darüber hinaus kann das Polyurethan im Dehnungsbereich von 50 % bis 200 % eine Spannung von 0,1 MPa bis 1 MPa, beispielsweise von 0,1 MPa bis 0,8 MPa, insbesondere von 0,1 MPa bis 0,3 MPa, aufweisen (Bestimmung nach ASTM D 412). Ferner kann das Polyurethan ein Elastizitätsmodul bei einer Dehnung von 100 % von 0,1 MPa bis 30 MPa, beispielsweise von 20 MPa bis 27 MPa, aufweisen (Bestimmung nach ASTM D 412).

Vorzugsweise ist das aus der Drucktinte erhaltene Polyurethanpolymer ein dielektrisches Elastomer und weist einen spezifischen elektrischen Volumenwiderstand gemäß ASTM D 257 von ≥ 10¹² bis < 10¹⁷ Ohm cm auf. Es ist weiterhin bevorzugt, dass das Polyurethanpolymer eine Dielektrizitätskonstante gemäß ASTM 150-98 von ≥ 5 bis ≤ 10 und eine dielektrische Durchbruchsfeldstärke gemäß ASTM 149-97a von ≤ 100 V/µm bis ≤ 200 V/µm aufweist. Grundsätzlich wird eine maximale Dielektrizitätskonstante angestrebt, um die Gebrauchsfähigkeit des Polymers zu optimieren.

Die Drucktinte kann neben den Komponenten A), B), C) und D) zusätzlich auch Hilfs- und Zusatzstoffe enthalten. Beispiele für solche Hilfs- und Zusatzstoffe sind Vernetzer, Verdicker, Lösemittel, Thixotropiermittel, Haftvermittler, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel. Bevorzugte Lösungsmittel sind Methoxypropylacetat und Ethoxypropylacetat. Bevorzugte Verlaufshilfsmittel sind Polyacrylate, insbesondere aminharzmodifizierte Acrylcopolymerisate.

Füllstoffe können beispielsweise die Dielektrizitätskonstante des Polymerelements regulieren. Vorzugsweise umfasst die Reaktionsmischung Füllstoffe zur Erhöhung der Dielektrizitätskonstanten wie Füllstoffe mit einer hohen Dielektrizitätskonstante. Beispiele hierfür sind keramische Füllstoffe, insbesondere Bariumtitanat, Titandioxid und piezoelektrische Keramiken wie Quarz oder Bleizirkoniumtitanat, sowie organische Füllstoffe, insbesondere solche mit einer hohen elektrischen Polarisierbarkeit, beispielsweise Phthalocyanine.

Außerdem ist eine hohe Dielektrizitätskonstante auch durch das Einbringen elektrisch leitfähiger Füllstoffe unterhalb der Perkolationsschwelle erzielbar. Beispiele hierfür sind Ruß, Graphit, einwandige oder mehrwandige Kohlenstoff-Nanoröhrchen, elektrisch leitfähige Polymere wie Polythiophene, Polyaniline oder Polypyrrole, oder Mischungen davon. In diesem Zusammenhang sind insbesondere solche Rußtypen von Interesse, die eine Oberflächenpassivierung aufweisen und deshalb bei niedrigen Konzentrationen unterhalb der Perkolationsschwelle zwar die Dielektrizitätskonstante erhöhen und trotzdem nicht zu einer Erhöhung der Leitfähigkeit des Polymers führen.

Angemerkt sei, dass die Begriffe "ein" und "eine" im Zusammenhang mit der vorliegenden Erfindung und insbesondere mit den Komponenten A), B) und C) nicht als Zahlwörter, sondern als unbestimmter Artikel verwendet werden, sofern der Kontext nicht eindeutig eine andere Aussage ergibt.

Ausführungsformen des erfindungsgemäßen Verfahrens werden nachfolgend geschildert, wobei die einzelnen Ausführungsformen in beliebiger Weise miteinander kombiniert werden können.

In einer Ausführungsform des erfindungsgemäßen Verfahrens wird die Drucktinte als Schicht in einem Schichtenverbund aufgetragen. Hierdurch lässt sich unter anderem ein beidseitig von Elektroden kontaktiertes dielektrisches Elastomer erhalten. Durch die kurzen Vernetzungszeiten ist der Prozess des Aufeinanderdruckens mehrerer Schichten auch effektiv.

In einer weiteren Ausführungsform des erfindungsgemäßen Verfahrens beträgt der Gehalt an freien Isocyanatgruppen in der Drucktinte beim Auftragen ≥ 50% bis ≤ 100%, bezogen auf den ursprünglichen Gehalt der Komponenten A) und/oder B). Die Abnahme des NCO-Gruppengehaltes kann beispielsweise mittels IR-Spektroskopie überwacht werden. Der Gehalt kann auch ≥ 60% bis ≤ 90% oder ≥ 70% bis ≤ 80% betragen. Bei den genannten NCO-Gruppengehalten lässt sich die Drucktinte auch noch zusammen mit sehr feinen Sieben einsetzen, ohne dass durch eine zu weitgehende Vernetzung des Polyurethans die Viskosität der Drucktinte zu hoch ansteigt.

In einer weiteren Ausführungsform des erfindungsgemäßen Verfahrens wird nach dem Auftragen der Drucktinte diese für eine Zeitdauer von ≥ 1 Sekunde bis ≤ 10 Minuten auf eine Temperatur von ≥ 30 °C bis ≤ 150 °C erwärmt. Die Zeitdauer kann auch ≥ 30 Sekunden bis ≤ 8 Minuten oder ≥ 1 Minute bis ≤ 5 Minuten betragen. Weiterhin kann die Erwärmungstemperatur auch ≥ 40 °C bis ≤ 120 °C oder ≥ 50 °C bis ≤ 100 °C betragen. Diese Ausgestaltungen der thermischen Vernetzung des Polyurethans führen zu sehr effektiven Druckprozessen. Das Erwärmen findet vorzugsweise in einem Schranktrockner und besonders bevorzugt in einem Durchlauftrockner statt.

In einer weiteren Ausführungsform des erfindungsgemäßen Verfahrens ist das Polyisocyanat A) ein Biuret eines aliphatischen Polyisocyanats. Vorzugsweise handelt es sich um das trifunktionelle Biuret von 1,6-Hexamethylendiisocyanat.

In einer weiteren Ausführungsform des erfindungsgemäßen Verfahrens ist das Polyisocyanat-Prepolymer B) ein Prepolymer, das erhältlich ist aus der Reaktion eines trifunktionellen Polypropylenglykol-Polyethers mit Diphenylmethandiisocyanat (MDI) und/oder Hexamethylendiisocyanat (HDI). Es ist weiterhin möglich, dass neben dem trifunktionellen Polyol auch noch ein difunktionelles Polypropylenglykol-polyethylenglykol-polyetherpolyol in der zum Prepolymer führenden Reaktionsmischung eingesetzt wird. Vorzugsweise liegt das Molekulargewicht Mₙ des zuvor genannten trifunktionellen Polyols in einem Bereich von ≥ 5800 g/mol bis ≤ 6200 g/mol und des zuvor genannten difunktionellen Polyols in einem Bereich von ≥ 1800 g/mol bis ≤ 2200 g/mol.

Das trifunktionelle Polyol zur Herstellung des Prepolymers A) weist bevorzugt einen Polydispersitätsindex M_{w}/Mₙ von ≥ 1,0 bis ≤ 1,1 auf. Der Polydispersitätsindex lässt sich mittels Gelpermeationschromatographie (GPC) gegen einen Polystyrolstandard bestimmen. Vorzugsweise liegt er auch in einem Bereich von ≥ 1,0 bis ≤ 1,08 oder ≥ 1,0 bis ≤ 1,05. Solch ein einheitlicher Aufbau des Polyols leistet einen Beitrag zu einem regelmäßigen Polyurethanpolymer.

In einer weiteren Ausführungsform des erfindungsgemäßen Verfahrens ist die gegenüber Isocyanatgruppen reaktive Verbindung C) ein Polyesterpolyol, das erhältlich ist aus der Reaktion von Adipinsäure mit Hexandiol. Es ist weiterhin möglich, dass neben Hexandiol auch noch Neopentylglykol in der zum Polyol führenden Reaktionsmischung eingesetzt wird.

In einer weiteren Ausführungsform des erfindungsgemäßen Verfahrens umfasst der thermisch aktivierbare Katalysator D) Zinn, Titan, Zirkonium und/oder Hafnium.

Nach einer gegenüber dem vorstehenden noch weitergehenden Ausgestaltung umfasst der durch Temperaturerhöhung aktivierbare Katalysator D) einen Zr-Chelatkomplex. Überraschenderweise hat sich gezeigt, dass diese eher für wässrige Systeme konzipierten Katalysatoren auch für das erfindungsgemäße Verfahren geeignet sind.

In einer weiteren Ausführungsform des erfindungsgemäßen Verfahrens wird der Katalysator D), bezogen auf den Titan-, Zirkonium- und Hafniumanteil am Gesamtgewicht der Drucktinte, in einem Anteil von ≥ 0,0003 Gewichts-% bis ≤ 0,009 Gewichts-% eingesetzt. Vorzugsweise beträgt dieser Anteil ≥ 0,0006 Gewichts-% bis ≤ 0,0075 Gewichts-% und mehr bevorzugt ≥ 0,0015 Gewichts-% bis ≤ 0,006 Gewichts-%. Solche Katalysatormengen steigern die Effektivität eines Siebdruckverfahrens in der erfindungsgemäß beschriebenen Weise, ohne dabei einen die Funktion eines dielektrischen Elastomers beeinträchtigenden Effekt zu haben.

Übliche kommerziell erhältliche Katalysatorzubereitungen können beispielsweise in einem Anteil von ≥ 0,01 Gewichts-% bis ≤ 0,3 Gewichts-%, bezogen auf den Gesamtanteil der Katalysatorzubereitung am Gesamtgewicht der Drucktinte, eingesetzt werden. Vorzugsweise beträgt dieser Anteil ≥ 0,02 Gewichts-% bis ≤ 0,25 Gewichts-% und mehr bevorzugt ≥ 0,05 Gewichts-% bis ≤ 0,2 Gewichts-%.

Bezogen auf beispielsweise den Zirkoniumanteil bedeuten die angegebenen Mengen einen Anteil von ≤ 0,0003 Gewichts-% bis ≤ 0,009 Gewichts-% am Gesamtgewicht der Drucktinte.

Ein weiterer Gegenstand der vorliegenden Erfindung ist die Verwendung einer Reaktionsmischung, die
ein Polyisocyanat A) und/oder
ein Polyisocyanat-Prepolymer B),
eine mindestens difunktionelle, gegenüber Isocyanatgruppen reaktive Verbindung C)
sowie weiterhin einen durch Temperaturerhöhung aktivierbaren Katalysator D)
umfasst, als Drucktinte in Siebdruckverfahren.

Zu Details der erfindungsgemäßen Verwendung wird Bezug auf die Ausführungen zum Verfahren genommen. Dasselbe gilt für die nachfolgend beschriebenen Ausführungsformen, welche weiterhin beliebig miteinander kombiniert werden können. Untenstehend nicht explizit erwähnte Ausführungsformen, die jedoch im Zusammenhang mit dem erfindungsgemäßen Verfahren beschrieben wurden, sind in Hinblick auf die Verwendung ebenfalls im Rahmen der vorliegenden Erfindung mit eingeschlossen.

In einer Ausführungsform der erfindungsgemäßen Verwendung ist das Polyisocyanat A) ein Biuret eines aliphatischen Polyisocyanats. Vorzugsweise handelt es sich um das trifunktionelle Biuret von 1,6-Hexamethylendüsocyanat.

In einer weiteren Ausführungsform der erfindungsgemäßen Verwendung ist das Polyisocyanat-Prepolymer B) ein Prepolymer, das erhältlich ist aus der Reaktion eines trifunktionellen Polypropylenglykol-Polyethers mit Diphenylmethandiisocyanat (MDI) und/oder Hexamethylendiisocyanat (HDI). Es ist weiterhin möglich, dass neben dem trifunktionellen Polyol auch noch ein difunktionelles Polypropylenglykol-polyethylenglykol-polyetherpolyol in der zum Prepolymer führenden Reaktionsmischung eingesetzt wird. Vorzugsweise liegt das Molekulargewicht Mₙ des zuvor genannten trifunktionellen Polyols in einem Bereich von ≥ 5800 g/mol bis ≤ 6200 g/mol und des zuvor genannten difunktionellen Polyols in einem Bereich von ≥ 1800 g/mol bis ≤ 2200 g/mol.

Das trifunktionelle Polyol zur Herstellung des Prepolymers A) weist bevorzugt einen Polydispersitätsindex M_{w}/Mₙ von ≥ 1,0 bis ≥ 1,1 auf. Der Polydispersitätsindex lässt sich mittels Gelpermeationschromatographie (GPC) gegen einen Polystyrolstandard bestimmen. Vorzugsweise liegt er auch in einem Bereich von ≥ 1,0 bis ≥ 1,08 oder ≥ 1,0 bis ≤ 1,05. Solch ein einheitlicher Aufbau des Polyols leistet einen Beitrag zu einem regelmäßigen Polyurethanpolymer.

In einer weiteren Ausführungsform der erfindungsgemäßen Verwendung ist die gegenüber Isocyanatgruppen reaktive Verbindung C) ein Polyesterpolyol, das erhältlich ist aus der Reaktion von Adipinsäure mit Hexandiol. Es ist weiterhin möglich, dass neben Hexandiol auch noch Neopentylglykol in der zum Polyol führenden Reaktionsmischung eingesetzt wird.

In einer weiteren Ausführungsform der erfindungsgemäßen Verwendung umfasst der Katalysator D) Zinn, Titan, Zirkonium und/oder Hafnium, besonders bevorzugt einen Zr-Chelatkomplex.

In diesem Fall kann der Katalysator weiterhin in einem Anteil, bezogen auf den Titan-, Zirkonium-und Hafniumanteil am Gesamtgewicht der Drucktinte, von ≥ 0,0003 Gewichts-% bis ≤ 0,009 Gewichts-% eingesetzt werden. Vorzugsweise beträgt dieser Anteil ≥ 0,0006 Gewichts-% bis ≤ 0,0075 Gewichts-% und mehr bevorzugt ≥ 0,0015 Gewichts-% bis ≤ 0,006 Gewichts-%. Solche Katalysatormengen steigern die Effektivität eines Siebdruckverfahrens in der erfindungsgemäß beschriebenen Weise, ohne dabei einen die Funktion eines dielektrischen Elastomers beeinträchtigenden Effekt zu haben.

Übliche kommerziell erhältliche Katalysatorzubereitungen können beispielsweise in einem Anteil von ≥ 0,01 Gewichts-% bis ≤ 0,3 Gewichts-%, bezogen auf den Gesamtanteil der Katalysatorzubereitung am Gesamtgewicht der Drucktinte, eingesetzt werden. Vorzugsweise beträgt dieser Anteil ≥ 0,02 Gewichts-% bis ≤ 0,25 Gewichts-% und mehr bevorzugt ≥ 0,05 Gewichts-% bis ≤ 0,2 Gewichts-%.

Eine ganz besonders bevorzugte Rezeptur für das erfindungsgemäße Verfahren und für die erfindungsgemäße Verwendung umfasst die folgenden Komponenten, jeweils angegeben ohne weitere Lösungsmittelanteile:

| Komponente | Gewichts-% |
|---|---|
| Hexamethylendiisocyanat-Biuret, Trimer | ≥ 20 bis ≤ 30 |
| Polyesterpolyol | ≥ 30 bis ≤ 40 |
| Zr-Chelatkomplex-Katalysator | ≥ 0,0003 bis ≤ 0,009 (Zr-Gehalt) |

Die vorliegende Erfindung betrifft ebenfalls einen elektromechanischen Wandler, umfassend eine durch ein erfindungsgemäßes Verfahren hergestellte Polymerschicht. Vorzugsweise ist die Polymerschicht Teil eines Schichtenverbunds, der so aufgebaut ist, dass diese Polyurethanpolymer umfassende Schicht beidseitig zumindest teilweise von Elektrodenschichten kontaktiert wird. Dann kann der erfindungsgemäße Schichtenverbund als beidseitig kontaktiertes dielektrisches Elastomer fungieren.

Die Dicke der dielektrischen Elastomerschicht beträgt vorzugsweise ≥ 1 µm bis ≤ 500 µm mehr bevorzugt ≥ 20 µm bis ≤ 200 µm und noch mehr bevorzugt ≥ 30 µm bis ≤ 150 µm Sie kann einstückig oder mehrstückig aufgebaut sein. Beispielsweise kann eine mehrstückige Schicht auch durch Aufeinanderdrucken von einzelnen Schichten erhalten werden.

Wenn eine mechanische Beanspruchung auf einen derartigen Wandler ausgeübt wird, so deformiert sich der Wandler beispielsweise entlang seiner Dicke und seiner Fläche und ein starkes elektrisches Signal kann an den Elektroden detektiert werden. Damit wird mechanische Energie in elektrische Energie umgewandelt. Der erfindungsgemäße Wandler kann folglich sowohl als Generator als auch als Sensor eingesetzt werden.

Unter Ausnutzung des entgegengesetzten Effekts, nämlich der Umwandlung von elektrischer Energie in mechanische Energie, kann der erfindungsgemäße Wandler andererseits gleichermaßen als Aktuator dienen.

Einsatzmöglichkeiten eines solchen elektromechanischen Wandlers finden sich in einer Vielzahl von verschiedensten Anwendungen im elektromechanischen und elektroakustischen Bereich, insbesondere im Bereich der Energiegewinnung aus mechanischen Schwingungen und allgemein periodischen Bewegungen ("Energy Harvesting"), der Akustik, des Ultraschalls, der medizinischen Diagnostik, der akustischen Mikroskopie, der mechanischen Sensorik, insbesondere Druck- Kraft- und/oder Dehnungssensorik, der Robotik und/oder der Kommunikationstechnologie. Typische Beispiele hierfür sind Drucksensoren, elektroakustische Wandler, Mikrophone, Lautsprecher, Schwingungswandler, Lichtdeflektoren, Membrane, Modulatoren für Glasfaseroptik, pyroelektrische Detektoren, Kondensatoren und Kontrollsysteme und "intelligente" Fußböden.

Die vorliegende Erfindung wird anhand des nachfolgenden Beispiels weiter erläutert, ohne jedoch darauf beschränkt zu sein.

### Beispiel:

Eine erfindungsgemäß einzusetzende Siebdrucktinte wurde gemäß der folgenden Rezeptur hergestellt:

| Komponente | Gewichts-% |
|---|---|
| Desmodur® N 75 MPA (75% in 1-Methoxypropylacetat-2) | 32,05 |
| (Hexamethylendüsocyanat-Biuret, Trimer, Bayer MaterialScience) | |
| Desmophen® 670 (80% in Ethoxypropylacetat) | 44,55 |
| (Polyesterpolyol, Bayer MaterialScience) | |
| Additol® XL480 50 % in Butoxyl | 0,96 |
| (Aminharzmodifiziertes Acrylcopolymerisat, Cytec) | |
| K-Kat® A209 | 0,20 |
| (Zr-Chelatkomplex, Lösung in t-Butylacetat, 14% Chelatkomplexgehalt, erhältlich bei King | |
| Industries, http://www.kingindustries.com/PDFS/KKAT%20TDS-PG13/Kkat-A209.pdf) | |
| Ethoxypropylacetat | 22,40 |

Der Katalysator war auf die Verarbeitung der im Beispiel genannten Polyurethankomponenten im Siebdruck eingestellt. Die verwendete Konzentration ermöglichte hierbei eine Beschleunigung der Reaktion zwischen Polyol (Desmophen 670) und Isocyanat (Desmodur N75) bei erhöhten Temperaturen in einem Trockner. Gleichzeitig führte die verwendete Katalysatorkonzentration nicht zu einer zu starken Einschränkung der Topfzeit, so dass das katalysierte System ca. 30 Minuten verarbeitet werden konnte, ohne einen die Funktion der dielektrischen Elastomerschicht beeinträchtigenden Effekt zu haben.

Die Vernetzungszeit des Polyurethans wurde dabei von ca. 20 Minuten ohne Katalyse auf fünf Minuten herabgesetzt. Dadurch wurde die Effektivität des Herstellprozesses gesteigert. Bei fünf Minuten Trocknungsdauer ist die Verwendung von Durchlauftrocknern einfacher, da die Trockenstrecke kürzer sein kann, bzw. die Bandgeschwindigkeit bei längeren Trocknern erhöht werden kann, was den Durchsatz pro Stunde erhöht. Eine Trockenzeit des unkatalysierten Systems von zwanzig Minuten erfordert bei schnellen Bandgeschwindigkeiten eine sehr lange Strecke im Bandtrockner.

Falls Trockner geeigneter Länge nicht zur Verfügung stünden, müssten Investitionskosten getätigt werden, andernfalls muss eine zeitaufwändige Batchtrocknung in einem Trockenschrank durchgeführt werden. Stellt man die Bandgeschwindigkeit sehr langsam, um auch in kürzeren Bandtrocknern die lange Trocknungszeit zu erreichen, wird auch der Druckprozess langsamer, da die Trocknung dann der geschwindigkeitsbestimmende Schritt wird. Bei langsamen Bandgeschwindigkeiten von einem Meter pro Minute benötigt man für zwanzig Minuten Trocknung bereits eine Strecke von zwanzig Metern bei 110 °C. Zusätzlich sind noch Vorheiz- und Abkühlzonen nötig.

Die Tinte aus dem Beispiel wurde mittels Siebdrucken auf ein Substrat aufgetragen und thermisch in einem Trockenschrank bei 110 °C für fünf Minuten ausgehärtet. Das so erhaltene Polyurethanelastomer wies die folgenden Eigenschaften auf:

| | | |
|---|---|---|
| Spezifischer elektrischer Volumenwiderstand: | 2,3 • 1015 Ω cm | (ASTM D 257) |
| Dielektrizitätskonstante: | 8,5 | (ASTM 150-98) |
| Dielektrische Durchbruchsfeldstärke: | 135 V/µm | (ASTM 149-97a) |
| Maximale Dehnung des Systems: | 120 % | (ASTM D 412) |
| E-Modul bei 50% Deformation: | 7,3 MPa | (ASTM D 412) |
| E-Modul bei 100% Deformation: | 26 MPa | (ASTM D 412) |

Die Ermittelung des elektrischen Volumenwiderstands wurde mit einem Messaufbau der Firma Keithley Instruments nach der oben erwähnten Norm durchgeführt. Weiterhin wurden die Dehnung des Systems mit einer Zwick Zugmaschine gemäß der entsprechenden Norm an einer freitragenden Schicht bis zum Reißen bestimmt und die E-Moduli aus der Spannungs-Dehnungskurve als Tangente bestimmt. Die Durchbruchfeldstärke wurde mit einem eigen konstruierten Messaufbau nach der oben erwähnten Norm bestimmt.

## Patentansprüche

1. Verfahren zum Bedrucken von Gegenständen, umfassend den Schritt des Auftragens einer Drucktinte mittels Siebdrucken,
**dadurch gekennzeichnet, dass**
die Drucktinte
ein Polyisocyanat A) und/oder
ein Polyisocyanat-Prepolymer B),
eine mindestens difunktionelle, gegenüber Isocyanatgruppen reaktive Verbindung C)
sowie weiterhin einen durch Temperaturerhöhung aktivierbaren Katalysator, D) umfasst.

2. Verfahren nach Anspruch 1,
**dadurch gekennzeichnet, dass**
die Drucktinte als Schicht in einem Schichtenverbund aufgetragen wird.

3. Verfahren nach Anspruch 1 oder 2,
**dadurch gekennzeichnet, dass**
der Gehalt an freien Isocyanatgruppen in der Drucktinte beim Auftragen > 50% bis < 100%, bezogen auf den ursprünglichen Gehalt der Komponenten A) und/oder B), beträgt.

4. Verfahren nach einem der Ansprüche 1 bis 3,
**dadurch gekennzeichnet, dass**
nach dem Auftragen der Drucktinte diese für eine Zeitdauer von ≥ 1 Sekunde bis ≤ 10 Minuten bis auf eine Temperatur von ≥ 30 °C bis ≤ 150 °C erwärmt wird.

5. Verfahren nach einem der Ansprüche 1 bis 4,
**dadurch gekennzeichnet, dass**
das Polyisocyanat A) ein Biuret eines aliphatischen Diisocyanats ist.

6. Verfahren nach einem der Ansprüche 1 bis 5,
**dadurch gekennzeichnet, dass**
das Polyisocyanat-Prepolymer B) ein Prepolymer ist, das erhältlich ist aus der Reaktion eines trifunktionellen Polypropylenglykol-Polyethers mit Diphenylmethandiisocyanat und/oder Hexamethylendiisocyanat.

7. Verfahren nach einem der Ansprüche 1 bis 6,
**dadurch gekennzeichnet, dass**
die gegenüber Isocyanatgruppen reaktive Verbindung C) ein Polyesterpolyol ist, das erhältlich ist aus der Reaktion von Adipinsäure mit Hexandiol.

8. Verfahren nach einem der Ansprüche 1 bis 7,
**dadurch gekennzeichnet, dass**
der thermisch aktivierbare Katalysator D) Zinn und/oder Titan und/oder Zirkonium und/oder Hafnium umfasst.

9. Verfahren nach Anspruch 8,
**dadurch gekennzeichnet, dass**
der Katalysator D) einen Zr-Chelatkomplex umfasst.

10. Verfahren nach Anspruch 8,
**dadurch gekennzeichnet, dass**
der Katalysator D), bezogen auf den Titan-, Zirkonium- und Hafniumanteil am Gesamtgewicht der Drucktinte, in einem Anteil von ≥ 0,0003 Gewichts-% bis ≤ 0,009 Gewichts-% eingesetzt wird.

11. Verwendung einer Reaktionsmischung, die
ein Polyisocyanat A) und/oder
ein Polyisocyanat-Prepolymer B),
eine mindestens difunktionelle, gegenüber Isocyanatgruppen reaktive Verbindung C)
sowie weiterhin einen thermisch aktivierbaren Katalysator D) umfasst, als Drucktinte in Siebdruckverfahren.

12. Verwendung nach Anspruch 11,
**dadurch gekennzeichnet, dass**
das Polyisocyanat A) ein Biuret eines aliphatischen Polyisocyanats ist, und/oder
das Polyisocyanat-Prepolymer B) ein Prepolymer ist, das erhältlich ist aus der Reaktion eines trifunktionellen Polypropylenglykol-Polyethers mit Diphenylmethandiisocyanat und/oder Hexamethylendiisocyanat, und /oder
die gegenüber Isocyanatgruppen reaktive Verbindung C) ein Polyesterpolyol ist, das erhältlich ist aus der Reaktion von Adipinsäure mit Hexandiol, und/oder
der Katalysator D) Zinn, Titan, Zirkonium und/oder Hafnium umfasst..

13. Verwendung nach Anspruch 12,
**dadurch gekennzeichnet, dass**
der Katalysator D) einen Zr-Chelatkomplex umfasst.

14. Elektromechanischer Wandler, umfassend eine durch ein Verfahren gemäß einem der Ansprüche 1 bis 10 hergestellte Polymerschicht.
